# EUROPEAN PATENT SPECIFICATION

(11) **EP 2 685 392 B1**
(45) Date of publication and mention of the grant of the patent: **19.12.2018**
(21) Application number: 12175625.8
(22) Date of filing: 09.07.2012
(51) Int. Cl.: G06F 17/30, H04L 29/08

(54) **MULTIPLE SERVICE REQUESTS HANDLING IN A WEB RUNTIME ENVIRONMENT**
HANDHABUNG VON MEHRFACHDIENSTANFORDERUNGEN IN EINER WEB-LAUFZEITUMGEBUNG
GESTION DES DEMANDES DE SERVICES MULTIPLES DANS UN ENVIRONNEMENT D'EXÉCUTION WEB

(43) Date of publication of application: 15.01.2014
(73) Proprietor: Canon Kabushiki Kaisha, Ohta-ku Tokyo 146-8501 (JP)
(72) Inventor: Bellessort, Romain, 35000 Rennes (FR); Fablet, Youenn, 35390 La Dominelais (FR); Ruellan, Hervé, 35000 Rennes (FR)
(74) Representative: Hitching, Peter Matthew

(56) References cited:
- WO-A2-2008/061042
- US-A1- 2009 113 449
- US-A1- 2010 049 788
- US-A1- 2012 143 864

## Description

### BACKGROUND OF THE INVENTION

This invention relates to the handling of services in a Web runtime environment such as a Web browser.

Providing services over the Web such as sharing of contents is becoming widespread as the number of web enabled devices is increasing significantly. For instance, a person enjoying an article on a given website can generally use Facebook (RTM), Twitter (RTM) or Google+ (RTM) buttons in order to share said article on corresponding social network.

However the increase of the types of provided services and of the web applications providing such services make the development of web applications more complex and the user interface overloaded by a list of buttons each dedicated to one given service and service provider Web application. There is consequently a need to improve the interactions between applications requesting services (e.g. the given website), the web applications providing services (e.g. those providing a "Share" service), and the user.

US 2009/0113449 describes a system using proxy actions to handle requests for actions that are not yet registered with a broker. When an action request is received and the action is not registered in the broker, a proxy action object is created and stored on a proxy action queue. Proxy action objects stored on the queue are read periodically and a check is made as to whether the actions they refer to have been registered yet. If an action for a queued proxy action object has been registered, the action request represented by the proxy action object is delivered to the appropriate service provider component. If a proxy action object remains on the proxy action queue without the corresponding action being registered before a corresponding proxy action queue element lifetime timer expires, the proxy action object is removed from the proxy action queue without the action being performed.

The present invention has been devised to address at least the foregoing concerns. More specifically, an object of the present invention is to define a communication model within a Web runtime environment adapted to address the above concerns.

### BRIEF SUMMARY OF THE INVENTION

The invention is defined by the subject matter of the independent claims. Advantageous enhancements are subject to the dependent claims.

### BRIEF DESCRIPTION OF THE DRAWINGS

**Figure 1a** illustrates a Web runtime environment run by the operating system of a processing device.
**Figure 1b** illustrates a variant Web runtime environment consisting of an operating system enabled to run directly Web applications.
**Figure 2** schematically illustrates a processing device configured to implement a Web runtime environment according at least one embodiment of the present invention.
**Figure 3** schematically illustrates an architecture model of the Web runtime environment according to an embodiment of the invention.
**Figure 4** is a flowchart that describes the process of handling service requests generated by a service requester application according to an embodiment of the invention.
**Figure 5** is a flowchart that describes the process of handling service requests by a service provider application according to one embodiment of the invention.
**Figures 6, 7** and **8** illustrate different arrangements of service request queues for transporting service requests between a WRE controller and one or more service provider application instances.
**Figure 9** is a flowchart that describes the process of handling service requests by a service provider application according to one embodiment of the invention implementing service interruption.
**Figure 10** is a flowchart that describes the process of handling multiple service requests according to another embodiment of the invention.
**Figures 11a** and **11b** illustrate examples of user interface for a "Share" service according to an embodiment of the invention.

### DETAILED DESCRIPTION OF THE INVENTION

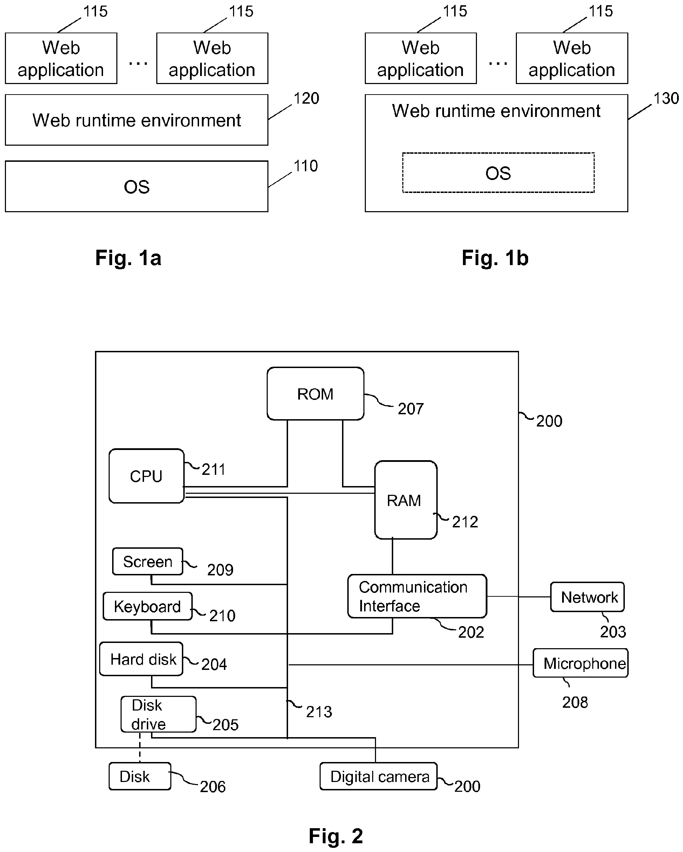

**Figure 1a** illustrates a Web runtime environment (WRE) 120 which is run by the operating system 110 of a processing device such as a computer device.

Web runtime environment is an environment able to retrieve Web applications 115, for instance using URLs (Uniform Resource Locators), and to run them by parsing and executing the instructions contained therein. Instructions are for example, and typically, written in HTML (Hypertext Markup Language), JavaScript and CSS (Cascading Style Sheets). A Web browser is an example of a Web runtime environment as it enables running Web applications by inputting URLs.

**Figure 1b** illustrates a variant Web runtime environment 130 consisting of an operating system enabled to run directly Web applications. In this case, instead of being loaded in a Web browser, the application is run by the operating system by a specific command for example and rendered in a dedicated window. An example of such operating system is Firefox OS.

In either implementation of the WRE, it is to be noted that Web applications loaded by the WRE may be retrieved from a server or a storage unit located in the same processing device as the device hosting the WRE, or located in a remote device connected to the processing device through a communication network. The remote device can be located in the same local area network as the processing device or in a distant network.

Alternatively, Web applications retrieved by the WRE may be natively installed on the processing device. This is for example the case for Firefox OS, whose applications are written in HTML5.

Thus, the Web runtime environment should be understood as a software application adapted to run Web applications obtainable from different sources such as Intranet, Internet, etc. or as a standalone software application running Web applications natively installed. In either case, the WRE is a purely client-side application.

Embodiments of the invention described herebelow are considered to be implemented by a Web runtime environment as illustrated by any of the figures 1a and 1b.

**Figure 2** schematically illustrates a processing device 200 configured to implement a Web runtime environment according at least one embodiment of the present invention. The processing device 200 may be a device such as a computer, a microcomputer, a workstation or a light portable device, e.g. a smartphone. The device 200 comprises a communication bus 213 to which there are preferably connected:
a central processing unit 211, such as a microprocessor, denoted CPU;
a read only memory 207, denoted ROM, for storing computer programs for implementing the operating system of the processing device and the WRE;
a random access memory 212, denoted RAM, for storing the executable code of the method of embodiments of the invention; and
a screen 209 for rendering loaded Web applications (Web pages) and/or serving as a graphical interface for inputting data from the user, by means of a keyboard 210 or any other pointing means.

Optionally, the apparatus 200 may also include the following components:
a communication interface 202 connected to a communication network 203 over which digital data is exchanged with other processing devices, e.g. a remote server or a storage unit.
a data storage means 204 such as a hard disk, for storing computer programs for implementing methods of one or more embodiments of the invention and data used or produced during the implementation of one or more embodiments of the invention; and
a disk drive 205 for a disk 206, the disk drive being adapted to read data from the disk 206 or to write data onto said disk;

The apparatus 200 can be connected to various peripherals, such as for example a digital camera 200 or a microphone 208, each being connected to an input/output card (not shown) so as to supply multimedia data to the apparatus 200.

The communication bus provides communication and interoperability between the various elements included in the apparatus 200 or connected to it. The representation of the bus is not limiting and in particular the central processing unit is operable to communicate instructions to any element of the apparatus 200 directly or by means of another element of the apparatus 200.

The disk 206 can be replaced by any information storage medium such as for example a compact disk (CD-ROM), rewritable or not, a ZIP disk or a memory card and, in general terms, by an information storage means that can be read by a microcomputer or by a microprocessor, integrated or not into the apparatus, possibly removable and adapted to store one or more programs whose execution enables the methods according to the invention to be implemented.

The executable code may be stored either in read only memory 207, on the hard disk 204 or on a removable digital medium such as for example a disk 206 as described previously. According to a variant, the executable code of the programs can be received by means of the communication network 203, via the interface 202, in order to be stored in one of the storage means of the apparatus 200, such as the hard disk 204, before being executed.

The central processing unit 211 is adapted to control and direct the execution of the instructions or portions of software code of the program or programs according to embodiments of the invention, which instructions are stored in one of the aforementioned storage means. On powering up, the program or programs that are stored in a nonvolatile memory, for example on the hard disk 204 or in the read only memory 207, are transferred into the random access memory 212, which then contains the executable code of the program or programs, as well as registers for storing the variables and parameters necessary for implementing the invention.

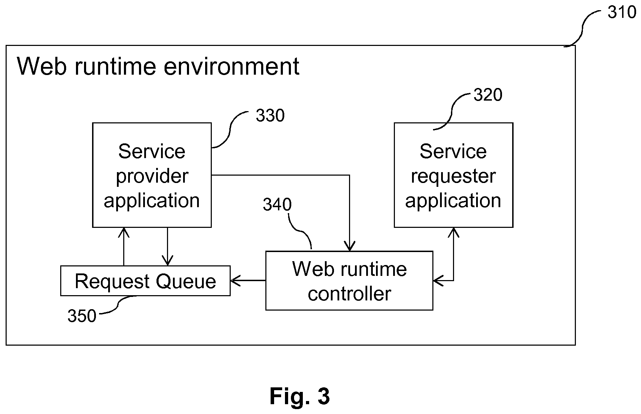

**Figure 3** schematically illustrates an architecture model of the WRE according to an embodiment of the invention.

A Web application referred to as a service requester application (SRA) 320 is loaded and run in the Web runtime environment 310. The service requester application is adapted to generate service requests that can be executed (served) by one or more other Web applications referred to as service provider applications (SPAs). The service requester application and the service provider application(s) represent Web applications 115 according to the model of figures 1a or 1b. The provided service can be for example of type "Share", "Edit", "Pick" for sharing, editing and picking a content respectively.

The service requester application is not required however to be a Web application. For example, in an alternate implementation, the service requester application 320 can be run outside the WRE by another runtime environment such as the operating system of device 200.

In response to a service request generated by the service requester application 320, Web runtime environment typically displays a list of possible service provider applications that can provide the requested service. The Web runtime environment then loads one service provider application 330 from the list, after a selection by a user for example.

If several service requests are generated, the above operation is repeated. Several service provider applications may be loaded by the WRE if different service provider applications have been selected to serve the several service requests (not illustrated in figure 3).

In the alternate implementation where the service requester application 320 is run outside the WRE by the operating system of device 200, the WRE provides an interface reachable by the service requester application to enable said service requester application to request the execution of a service request. Once the service requester application has provided its service request to the WRE, WRE handles this service request as it would handle a service request submitted from a Web application run by WRE.

As an example, a requester application running outside the WRE is a photo editing application run by the operating system. This application may have a "Share" button to directly share an edited photo on a social network (the requested service would be then of the "Share" type). The WRE provides an interface accessible to applications run by the operating system enabling them to transmit it a service request. By using the interface, the photo editing application can transmit a service request comprising a photo to be shared (this would be a "Share" service request). The WRE would then serve this service request as a request coming from a Web application, typically by displaying a list of possible service provider applications so that the user can select one, and then by transmitting the service request to the selected service provider application.

According to an embodiment of the invention, the service request is made available to the loaded service provider application by a Web runtime controller 340 through a service request queue 350. The Web runtime controller (or WRE controller) 340 is part of the Web runtime environment 310 and is responsible of controlling the communication between the different applications within the WRE.

Although only one pair of service provider application and request queue is illustrated in figure 3, at least as many queues are created as the number of loaded service provider applications. One or more queues are associated with each service provider application. For example, if two service provider applications are loaded, two request queues may be created, each of them intended to hold service requests that are to be processed by the service requester application with which the request queue is associated. Service requests from different service requester applications can be added to the same request queue provided that they need to be processed by the same service provider application.

The implementation of service request queue 350 advantageously makes it possible to select the service provider application 330 several times for serving several service requests. A further advantage of using a request queue is that there is no need to create several instances of the service provider application if this latter has been selected for serving several service requests.

In the implementation of the invention illustrated by figure 3, the request queue 350 is created by the Web runtime environment (WRE). In this implementation, the WRE (typically through the WRE controller) manages the queue, e.g. the WRE is responsible for the addition of new requests delivered by the SRA and the removal of requests delivered to SPA for execution. The WRE can further be responsible for the delivery (read) of the requests from the request queue to the SPA, and thus for defining the processing order of the requests in the queues. In such a case, either the WRE monitors when a new service request is needed by the SPA to deliver it, or delivers it irrespective of the SPA needs if this latter implements an internal buffering queue. Alternatively, the SPA is given a read access to the service request queue to get the requests. The SPA is thus responsible for defining the processing order of the requests in the queues.

In an alternative implementation (not illustrated), the request queue is created by the service provider application (SPA). In this implementation, the SPA manages the queue and the WRE can only pass service requests to the SPA, via the WRE controller 340. The way these requests are, for example, added to the queue is left to the SPA. The request queue is considered then part of the SPA. A buffering queue may or may not be inserted between the WRE controller 340 and the SPA for buffering the requests before passing them to the SPA for addition to the request queue.

Service provider application 330 processes the service requests in the request queue 350. The processing may or may not necessitate interaction with the user. When the processing is finished - or if an error occurs while processing the service request - result of the processing is transmitted to the service requester application by means of the Web runtime controller 340.

WRE controller 340 acts as an intermediate module enabling the SRA and the SPA to communicate through objects passing (objects being the service requests or the processing results) and thus insulating the two applications SRA and SPA and increasing security.

Detailed description of Web runtime controller 340, request queue 350 and service provider application 330 are provided with regard to the following figures.

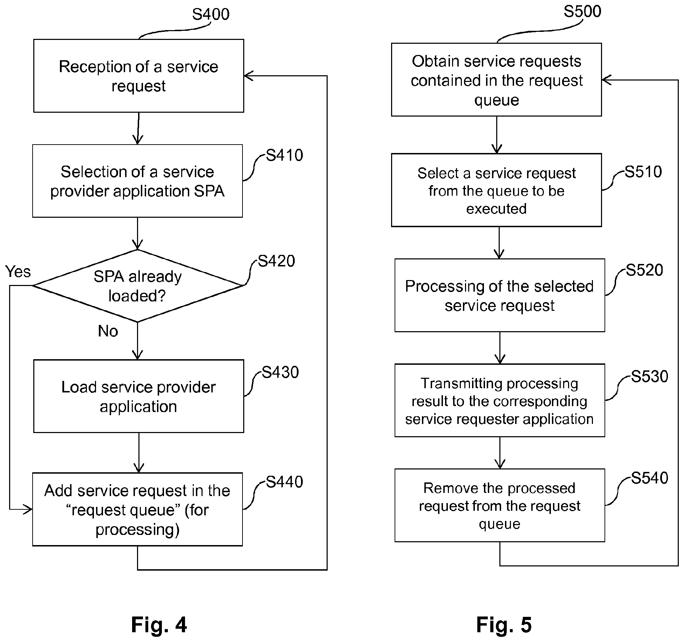

**Figure 4** is a flowchart that describes the process of handling service requests generated by a service requester application according to an embodiment of the invention. The process is run in the Web runtime environment by the web runtime controller 340.

At step S400, a service request initiated (generated) by a service requester application is received.

The service requester application is typically the application 320 run by the WRE as described with regard to figure 3. In this case, the service requester application is for example any Web page (client Web application) containing HTML and JavaScript code that can be loaded, parsed and rendered by a Web browser representing the WRE. Alternatively, the service requester application is run out of the WRE, e.g. by the operating system of the device 200 hosting the WRE, as previously described with regard to figure 3.

The service request is for example a JavaScript object generated by the Web client application representing the service requester application. When the object is created, the client Web application adds attributes (parameters) for defining the service request, such as for example the type of requested service (e.g. "Share", "View", "Edit",...), the payload data associated with the service (e.g. title and URL of an article to be shared, image to be edited, ...) and the type of payload data (e.g. text, image, music,...). The client Web application may add also methods to the JavaScript object that can be called once the service request (object) has been delivered to the service provider application and executed. These methods may be used to provide the result of the execution of the service (e.g. an "edited image" if the service was to edit an image or an error message in case of failure during the execution) either if the execution was successful (e.g. by calling a *postResult()* method) or unsuccessful (e.g. by calling a *postFailure()* method). The use of the above methods, referred to as call-back methods, make it possible to transmit information from the SPA to the service requester application without a priori knowledge of the service requester application by the SPA. In this example, the JavaScript object of the service request is similar in its structure to a Web Intent object as defined by the World Wide Web Consortium (W3C) for modeling a particular task which can be requested to be handled by a Web page or a Web application.

Following the reception of the service request, a service provider application (SPA) adapted to serve the request is selected at step S410. The selection is typically made by the user of the service requester application through a list of choices presented by the WRE.

Alternatively, the selection is made by the Web runtime environment based on a list of known/registered service provider applications.

In another alternate implementation, the service requester application suggests the service provider application that can be selected, or even imposes one explicit service provider application.

Once a service provider application is selected, it is checked at step S420 whether this application is already loaded onto the Web runtime environment, and if not, the application is loaded at step S430.

Loading of the service provider application comprises, for the Web runtime environment, obtaining the different resources and instructions necessary to run the service provider application, and in parsing those resources/instructions for execution (rendering).

Typically, obtaining the resources starts by retrieving an HTML document from the URL associated with the service provider application. The document is then parsed to determine which related (referenced) resources, such as JavaScript or CSS documents, are necessary to run the service provider application and the location from which they can be loaded. These resources are then loaded and rendered (executed) by the WRE.

In addition of the loading of the application, a service request queue (350) is created by the WRE at step S430 to store service requests directed to the loaded service provider application.

At step S440, the service request received at step S400 is then stored in the request queue associated with the loaded service provider application for later processing. The request queue is the queue created in the previous step or one that was previously present and associated with the provider application.

The process loops then back to step S400 for waiting for a further service request to process. The processed described by figure 4 can be executed as long as the WRE is running.

The queues can be managed in variety of different ways. As previously mentioned, a queue can be managed either by the WRE or by the SPA. So in an alternative implementation, the queue can be part of the code of the SPA in which case it is created when the SPA is loaded by the WRE.

In the case where it is determined at step S420 that the provider application is already loaded, or when further service requests are received directed to the same service provider application, they are stored in the same queue associated with that provider application.

Several queues are created to serve different SPAs, but several queues can also be created to serve several instances of a given SPA or even one instance of a SPA. The WRE can reload the same provider application to restart the application or to create a distinct instance of the application. In a Web browser, the restart represents for example the reloading of a same Web page, and the creation of a distinct instance represents the creation of a new Web page (e.g. a new tab or window). There are situations where even if a same SPA is selected to serve different requests, it's more advantageous to create different instances of the SPA, each of them serving one or more requests. For example, a service requester application may provide its own user interface in which the service provider application is to be displayed and thus a previously loaded SPA will not be used to serve the request generated by that requester application. Another example is the case of a SPA capable of serving services of different types, and where user interaction with the SPA is simplified if one SPA instance is loaded for each type of service. Other situations may occur depending on the WRE or user preferences.

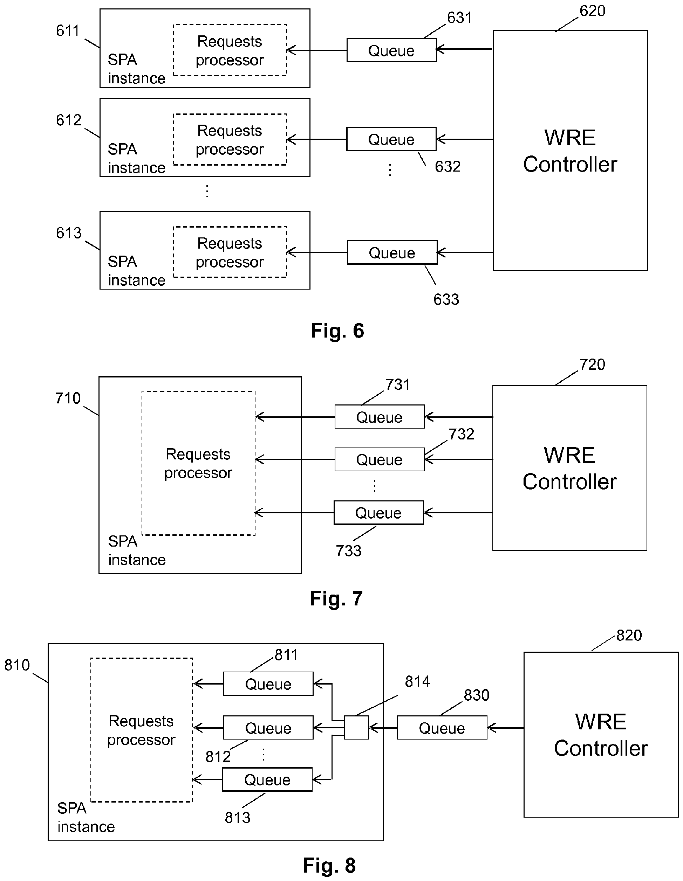

Different queues 631, 632 and 633 are then created to hold the requests directed to each SPA instance 611, 612 and 613 respectively as illustrated in **figure 6** with an example of three SPA instances. The requests are obtained from the service requester applications by the WRE controller 620. Each created queue makes it possible to serve more than one service request to the corresponding SPA if needed, i.e. when one SPA instance is selected several times.

There are also situations where the service provider application is designed to process several service requests at the same time, the requests being of the same type or of different types.

An example of one service provider application (instance) able to process multiple service requests of the same type at the same time is an image editor whose interface is able to display two images and to edit both images independently. If three "Edit" service requests are received by this application, two can be handled by the application at the same time. When the user has completed one of the two editing, the third service request can be processed (i.e. the image associated to this request is displayed, and user can edit it).

An example of one service provider application (instance) able to process multiple service requests of different types at the same time is a gallery application that 1) displays a list of images, each image being a possible target for a "Pick" service request, and 2) is able to receive "Save" service requests in order to save an image to a web server, said image being added to the gallery (hence displayed) once saved.

Different solutions may exist for creating different request queues for a given SPA instance. For example, if requests queues are handled by the WRE, provisions could have been made in the source code of the SPA to declare different request queue objects. These request queues are identified by the WRE during the loading of the application and created as needed. If no request queue is explicitly defined in the source code of the application, a single request queue is created. **Figure 7** illustrates an example of one SPA instance 710 that is served by three request queues 731, 732 and 733. The requests are obtained from the service requester applications by the WRE controller 720.

Another example is illustrated in **figure 8**. Even if the Web runtime environment handles a single request queue 830 (could be a buffering queue only) for one service provider application 810, the service provider application 810 may be designed to distinguish, on its side, different request queues. For this, a dedicated process 814 of the application is responsible for interacting with the request queue 830 on one side and with different request queues 811, 812 and 813 internal to the application on the other side for assigning the received service requests. The requests are obtained from the service requester applications by the WRE controller 820.

The request queues described above can be managed by the WRE or the service provider application as detailed with regard to figure 3. If the processing order of the requests in the queues is determined by the service provider application, an input from user may possibly be considered. More details are provided with regards to figure 5.

According to a variant implementation of the process of handling service requests by the WRE (not illustrated), if it is determined at step S420 that no instance of the service provider application is loaded, a service request queue is first created prior the loading of the application and the service request received at step S400 is stored in that request queue. Thus, when the service provider application is loaded later on, it can process the stored request during the loading and faster processing is thus achieved.

**Figure 5** is a flowchart that describes the process of handling service requests by a service provider application according to one embodiment of the invention. The flowchart is executed by the service provider application when loaded and run by the Web runtime environment.

At a first step S500, the SPA obtains service requests stored in the service queue associated to it to select a service request to process. The SPA reads regularly the service queue, including when the SPA is loaded, to fetch for new requests added to the queue. Alternatively, the execution of step S500 by the SPA is triggered by the WRE as soon as a new request is added to the queue.

At step S510, a service request to be executed is selected among the obtained service requests. This selection may be performed by establishing an execution order based on a given criteria and selecting a service request based on the established order. A simple solution consists in applying a well-known queue policy to the request queue, for instance First In First Out (FIFO) or Last In First Out (LIFO), or considering priorities assigned by the service requester application(s). Another criterion that may be considered is to select the service request issued by the last service requester application that the user interacted with. Indeed, this is likely what the user expects after performing an action through the user interface. Yet another solution consists in providing the user with the possibility of manually selecting one of the service requests present in the request queue through a dedicated user interface. Also, the user interface may let the user decide between the above cited strategies, e.g. FIFO or LIFO policy, priority to last issued service request or manual selection.

More generally, providing a user interface that displays information (on screen 209) about the service requests that are present in the queue at a given time may be helpful for the user even if the possibility of selecting the request to be processed is not provided. This interface lets the user know for example what service requests have actually been transmitted by the service requester application.

At step S520, the selected service request is processed by the SPA. The processing may or may not involve the user depending on the service to be provided. For instance, if the service request is a "Share" request, the service provider application may simply get the payload data to save from the service request and upload it to a web server for sharing. Alternatively, the SPA may enrich the payload data to share by involving the user, for instance by providing fields to input a file name and tags associated with the payload data and then requiring the user to click on a button to actually save (share) the enriched payload data on a web server.

At step S530, the result of the execution of the service request by the SPA is transmitted to the corresponding service requester application. The result may include status information on the success or failure of the execution, or data expected by the service requester application. For example, for a "Share" service, the result may only be a code or a string indicating that payload data has been successfully shared or a failure occurred (status information), and no data needs to be returned to the requester application. In the case of an "Edit" service, the result will typically be status information (success/failure) and the edited data. This latter is for instance an image that was sent for edition to the service provider application and that is returned to the service requester application after having been edited by the user.

Transmission is performed by invoking one of the method defined in the service request (call-back methods), for example *postResult()* and *postFailure()*, depending on the success or the failure of the execution. Information can thus be transparently transmitted to the service requester application, i.e. the service provider application is only aware about the content of the service request including the call-back methods, no further information about the service requester application is needed.

Once the result of the processing of the service request has been transmitted to the service requester application, the service request is removed from the request queue by the SPA according to one implementation of the invention (step S540).

Alternatively, the service request is removed from the request queue by the WRE because the WRE is necessarily aware about the completion of the service request processing. This advantageously makes it possible to design a service provider application that has only read access to the service request queue. Write access - and hence queue management capability - is given then to the WRE that can add and remove requests from the queue. As described above, if the WRE forwards service requests to their associated SPA as soon as received (provided SPA being already loaded), SPA does not even need read access to the request queue.

According to a variant implementation of the process of handling service requests by a service provider application, a plurality of service requests are selected at step S510. These service requests are then processed collectively at step S520. This collective processing may be appropriate when for example a same service is requested in the plurality of service requests. It may consist for instance in merging the plurality of requests in one resulting (merged) request and processing this latter as a single service request. It may be necessary however when transmitting the processing result of the merged request, to send results individually to each requester application; or if all the requests concern the same requester application, to send as many results as the number of generated service requests, using the corresponding call-back methods. The implementation of service request queue advantageously makes it possible to collect service requests and to process them collectively by the service provider application.

For example, if the user relies on a given service provider application to share URLs of articles he enjoys, the user may click on various "Share" buttons in various service requester applications, the service requests being added to the request queue of the given service provider application. Then, instead of processing each service request independently - i.e. each article is shared separately from the other - the service provider application may allow the user to merge all or some of the service requests by grouping corresponding payload data (e.g. grouping URLs of articles), and then performing a single "Share" operation on the grouped data.

Similarly, instead of performing multiple "Save" operations in order to save a set of files received through a corresponding set of service requests, a service provider application may allow a user to save all the files together as a group of files, possibly using a packaging format (e.g. zip).

As indicated above, even though different service requests are processed collectively as a single one, the service provider application may transmit a processing result for each service request. This result may either be the same for all service requests, in particular when the result transmitted is simply a code or a string value indicating a successful processing, or different values (for instance, an application may define different codes/string values to describe the case of merged service requests).

According to another variant implementation of the process of handling service requests by a service provider application, several service requests (or groups of service requests according to the variant implementation described above) may be selected and processed in parallel. This other variant implementation is a variation of flowchart of figure 5 or any variant implementation of it according to embodiments of the present invention. If the processing of a request (or a collective processing of a group of requests) takes time, it is not necessary to wait for the completion of that processing to start processing a new request (or group of requests).

For example, a "Save" provider application may receive a number of service requests for saving large files. Provider application may display the selected service requests in a first section of its user interface and a list of all the service requests in a second section of the user interface. When a first service request is selected from the list, it is displayed in the first section of the user interface and the user may be allowed to populate various fields describing e.g. file content and file name. The user interface may also contain a button in order to validate the values of these fields and to start the saving operation (which may last a significant amount of time). When a second service request is selected from the list, it is similarly displayed in the first section of the user interface (with the first request if the saving of this latter is still ongoing) and the user is also given the possibility to populate various fields if necessary. The user may click then to start the saving operation of the file associated with the second request. Several saving operations are then performed at the same time, and the status of each saving operation may be indicated in the second section of the user interface displayed by the provider application. Status indication may include for example percentage of data already saved for each service request whose saving has started.

According to yet another variant implementation of the process of handling service requests by a service provider application, or of any variant of implementation of it described herein, the processing of a service request (or a group of service requests) may be interrupted to process another service request.

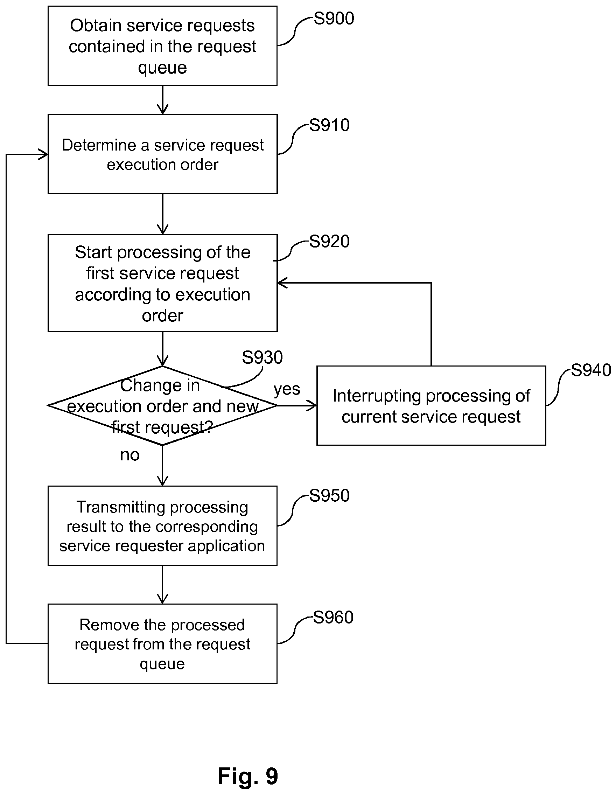

**Figure 9** is a flowchart that describes the process of handling service requests by a service provider application according to one embodiment of the invention implementing service interruption. The flowchart is executed by the service provider application when loaded and run by the Web runtime environment.

At step S900, the SPA obtains service requests stored in the service queue associated to it to select a service request to process. The SPA reads regularly the service queue, including when the SPA is loaded, to fetch for new requests added to the queue. Alternatively, the execution of step S900 by the SPA is triggered by the WRE as soon as a new request is added to the queue.

At step S910, an execution order is determined for the obtained service requests. As described with regard to step S510, FIFO or LIFO may be used to determine execution order, and data input by user may also be considered in this determination.

Once an execution order has been determined, the processing of a first service request selected according to the determined execution order is started at step S920. Starting the processing of a service request may for instance consist in updating service provider application user interface to take into consideration said service request. For instance, in the case of an "Edit" service request, the resource to be edited (e.g. an image) would be first displayed in the user interface. Processing may also comprise user actions, for instance edit operations (e.g. applying a filter to an image), or field input (e.g. input a title or a comment).

However, contrary to figure 5 process, service request processing may be interrupted in case of a change in execution order resulting into a different service request eligible for selection, referred to as new first request, because having the highest priority in the execution order (and thus higher than the current request). This potential change of the service request that needs to be executed is checked periodically while a current request is under processing. Such change can also be notified by a call-back issued from Web runtime environment. Corresponding test is made at step S930. The circumstances that may lead to a change in execution order are described hereinafter.

If such a change happens, then the processing of current service request is interrupted at step S940. The interruption of service request processing may imply saving current state of the application in order to enable restoring of this state later on. Saving the state of application may comprise saving values of variables (e.g. the current value of a text field or the current version of an image that has been edited), but also saving a history of operations performed (e.g. the different operations applied to an image being edited). The service request whose processing has been interrupted (current request) typically takes the second position in execution order, which means that if order is not further modified while processing the new first service request, the interrupted service request will get the first position after completion of the new first service request processing.

Interruption step S940 is followed by step S920. It should be noted that in addition to what has been described above, step S920 also checks whether a state of application has previously been saved with regards to the service request that is now to be processed (indicated as "first service request" in step S920). This would be relevant when, after processing the new first request, processing of the previously interrupted service request is resumed at step S920. Indeed, if such state information is available, starting the processing of said first service request requires taking into account said state information (e.g. setting a field or an image with their saved values). Advantageously, a single method could be called to get current state of the application, and a single method could be called to set the current state of the application.

After processing the first new request at step S920, and if no further change in execution order is determined at step S930 (which means that no change happens until the completion of the whole process at step S960), result is sent to corresponding service requester application at step S950. At step S960, the processed service request is removed from the request queue and should no more be considered in the determination of the execution order. The removal of the processed request results into a modification of the execution order (the second service request according to previously determined execution order becomes the first one) which is also determined at step S910. A new execution order can then be determined and process loops back again with the following steps for a new iteration. It is to be noted that the service request that has been interrupted can now be processed during this new iteration if no higher priority request is added in the meanwhile.

If there are no more service requests in the queue, the process waits for a new service request to be received to determine an execution order.

Change in execution order may happen in different circumstances. First, a change may happen in response to a user input. For instance, if several service requests are present in the request queue of a given service provider application, user may be provided an interface allowing him/her to select one of these service requests. Selecting a service request is equivalent to assigning the first position in execution order to the selected service request. Other interfaces may allow user not only to assign the first position in the execution order to a given service request, but also to fully determine a new execution order, assigning a chosen position to each service request in the request queue. If the application state is not saved while interrupting the processing of a service request, a warning message may be displayed to the user indicating that current status will be lost if no saving is performed and changing the execution order is confirmed.

Second, a change may happen because of the settings (preferences) of the service provider application. For instance, if the application is configured to apply a strict LIFO management of the request queue and the execution order, as soon as a new service request is added to the request queue, the service request would get the first position in the execution order. Yet, such behaviour may not be expected by a user who has already started to process a service request. Therefore, a more appropriate behaviour consists in assigning the first position in execution order to a newly received service request only if the user has not performed any action in relation with the processing of the currently selected service request.

Third, Web runtime environment may also decide to assign first position in execution order to a service request based on user inputs. Thus, if two service requester applications are served by the same service provider application, the fact that user interacts with one of the two service requester applications may result in the assignment of the first position in execution order to a service request from the requester application the user interacted with. As a matter of fact, user may find more intuitive that the service provider application automatically selects the service request from the service requester application the user last interacted with.

Finally, it should be noted that some processing types may prevent user, SPA and WRE from changing execution order. For instance, in case of a "Save" service request, changing execution order may be prevented when a resource is being saved by uploading it to a server. In particular, user may not be allowed to select a new service request to assign it the first position in execution order.

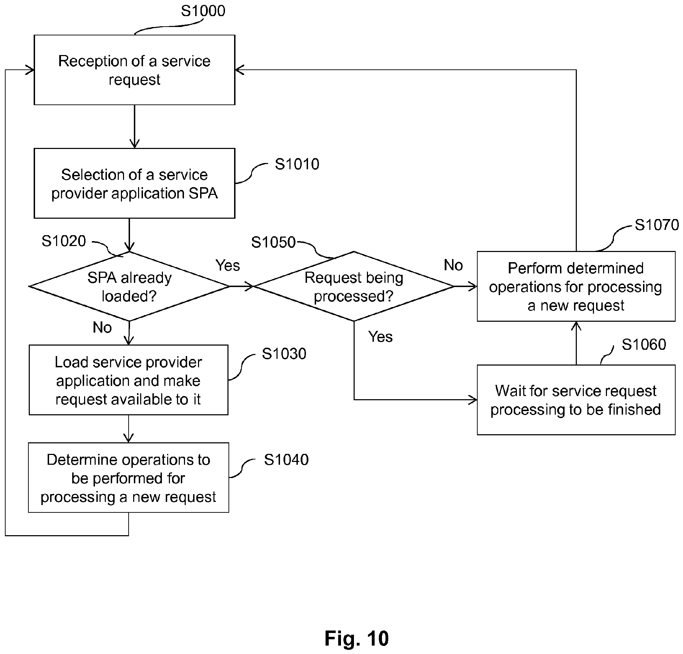

**Figure 10** is a flowchart that describes the process of handling multiple service requests according to another embodiment of the invention. The process is run in the Web runtime environment by the web runtime controller 340 and is adapted to handle multiple service requests when the implemented service provider application can handle only single service requests, for example according to the flowchart of figure 5.

At step S1000, a service request is received by Web runtime environment controller. At step S1010, a service provider application is selected for processing this service request. Once a service provider application is selected, it is checked at step S1020 whether this application is already loaded onto the Web runtime environment, and if not, the application is loaded at step S1030 and the service request received is made available to it (service request queue is created as needed).

At step S1040, the operations (function calls) involved in the processing of a service request by the SPA are determined by the WRE. Such determination may in particular be based on the processing of the service request already made available to the SPA. Two cases may be distinguished depending on whether user interaction is needed to process a service request. If a user interaction is needed, then only the initiation of the processing of the service has to be determined; if no user interaction is needed, then the whole processing of the service request has to be determined.

A way to determine operations to be performed is to record, while the service provider application is loaded, the different operations (function calls) performed on the object representing one service request, as well as the operations performed in the service provider application after the loading of the application. To restore initial state of the application, all these operations simply have to be unmade; then, passing a new service request simply implies re-executing the sequence of unmade operations. In some cases, only a part of unmade operations should be re-executed, especially when user interactions occur. As a matter of fact, user interaction are specific to a given service request, and the user interactions performed for a first service request may not be the same as the ones performed for a second service request.

Another way to determine calls to be performed may rely on source code inspection to identify specific methods called when a service request is processed. This approach may be efficient when service provider application has been coded using a modular model, for instance with one method for initialization and another one for processing.

After step S1040, the process loops back to step S1000 for the reception of a new service request.

If it is checked at step S1020 that the SPA is already loaded onto the Web runtime environment, it is determined at step S1050 whether a service request is being processed by said service provider application. If so, Web runtime environment waits for service request processing to be finished at step S1060. Web runtime environment knows when such processing ends because the service provider application relies on the WRE controller to transmit the processing result to the corresponding service requester application.

Once service request processing is finished, or if no request is being processed at step S1050, the operations determined for processing a new request are performed at step S1070. If no user interaction is needed, the service request may be fully processed; on the other hand, if user interaction is needed, the processing is simply initiated (e.g. user interface is updated to display the new service request).

After step S1070, the process loops back to step S1000 for the reception of a new service request.

In order to improve user experience, Web runtime environment may also display a specific user interface so that the user can see the different service requests in the request queue and select one of the requests. In this case, similarly to what has already been described with regarding of the service provider application, the state of the application may be saved by the Web runtime environment in case of interruption of processing. Then, when selecting a service request for which processing has already been started, the same state can be restored.

An alternate implementation of the WRE for enabling a service provider application to handle several requests, is to save its state after the application has been loaded and initialized (during step S1030), but before the application has started processing the first request (also in step S1030). Then during step S1070, the current state of the service provider application is replaced by the saved state, and the new request is passed to it. The saved state of a service provider application includes the DOM corresponding to its html, and the JavaScript defined variables and their corresponding values.

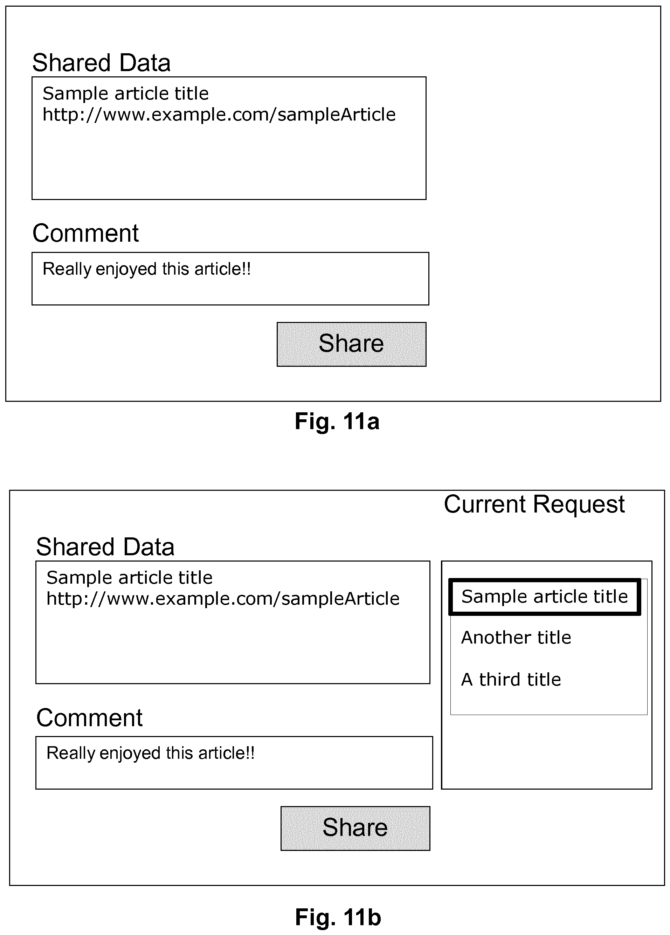

**Figures 11a** and **11b** illustrate examples of user interface for a "Share" service according to an embodiment of the invention.

First, after receiving a service request for a "Share" service from a service requester application, a service provider application SPA is selected for processing this "Share" request and then loaded in a Web browser (it is assumed that this application is not already loaded in the Web browser). If needed, the user may first have to log in so that he can be identified by the service provider application (especially if the service provider application is a social network the user wants to use to share data with his connections on said social network).

While application SPA is loaded, the service request is made available to it. Therefore, the user interface of application SPA displays data from the service request. As can be seen in figure 11a, the data to be shared, contained in the request, contains an article ("Sample article title") and an URL (http://www.example.com/sampleArticle, which is assumed to be the URL of said article). Furthermore, application SPA allows user to add a comment about the article. Finally, a "Share" button is displayed so that user can actually perform the sharing operation. After clicking on this button, service provider application SPA will submit corresponding data to its server, and the data will actually be shared.

Advantageously, according to an embodiment of the invention, if a new service request from a service requester application is to be transmitted to the service provider application, the service provider application is not loaded again and the creation of a new instance in a new window or in a new tab of the Web browser is avoided. This enhances user experience with the user interface. The new service request is typically added to the request queue by the Web browser, said request queue being associated to said service provider application SPA.

As explained in more detail in the above embodiments, the request queue may be handled by the Web browser (or more generally, by a Web runtime environment) or by the service provider application. When such a new service request is added to the request queue, service requester application has different ways to handle it. A possible solution consists in displaying a list of service requests to be processed, as illustrated on figure 11b (list below "Current Request"). Then, the application can automatically select one of the service request to be processed (for instance, the first one it received), but it may also let the user select one of the service requests.

In this example, three service requests are represented through the title of the data to which they are associated: *"Sample article title*", "*Another title*" and "*A third title*" (each request is considered to be a "Share" service request). If user selects a service request different from current one, or if another service request is selected by the application (for instance after completing the sharing of the data obtained from a service request), user interface is updated to display the data associated to the selected request (i.e. "Shared data" field is updated). If the processing of a service request is interrupted before completion (e.g. because another service request is selected), the value of the "Comment" field may be saved so that the same value can be set when going back to the processing of said service request. Based on the selected request, appropriate methods for transmitting the results to the corresponding service requester application can be used; this transmission is done once the processing of a request is finished (here, processing is finished when a confirmation is obtained from the server associated to service provider application SPA that the data submitted has been shared).

It is to be noted that avoiding loading several instances of the SPA is not the only advantage provided by the embodiments of the invention. Indeed, a further advantage is that a user may be able to send multiple service requests to a single service provider application (from one or more service requester applications), and process these service requests afterward. Furthermore, as described in the detailed description of the embodiments of the invention, the fact that several service requests are made available to the service provider application may allow it to provide additional features such as grouping of service requests (cf. description of the collective processing of service requests). In this example, all the articles could be shared as a single set of articles, along with a comment such as "Today's articles".

## Claims

1. A method of processing service requests in a Web browser (310) run by a processing device, the method comprising:
loading into the Web browser a service provider application (S430, S1030);
creating (S430, S1030) a request queue (350) for storing service requests prior to their processing by the service provider application;
receiving by the Web browser a first service request from a service requester application (S400, S1000) and storing the first service request in the request queue;
receiving by the Web browser a second service request from the same or another service requester application (S400, S1000) and storing the second service request in the request queue, the service requester application, and the other service requester application if different, being executed either by the Web browser or by an operating system of the processing device; said method **characterized in that** it comprises:
processing the first service request and the second service request at the same time using a same instance of said service provider application (S520, S920, S1070); and
transmitting data resulting from the processing of the first and the second service requests to the corresponding service requester application (S530, S950) within the processing device.

2. Method according to claim 1, wherein the created one or more request queue (731, 732, 733) are managed by the Web browser.

3. Method according to claim 1, wherein the created one or more request queue (831, 832, 833) are managed by the service provider application.

4. Method according to claim 2 or 3, wherein the service request is a data object generated by the service requester application and containing attributes defining the type of requested service, the payload data associated with the service and the type of payload data.

5. Method according to claim 4, wherein a plurality of request queues are created at the creating step, each being arranged to store service requests of a given type.

6. Method according to any one of claims 1 to 5, further comprising a step of selecting (S510, S920) from the at least one created queue one of the first and the second service requests to be processed by the service provider application.

7. Method according to claim 6, wherein the selecting is performed by:
establishing an execution order based on one of the following policies: First-In First-Out (FIFO), Last-In First-Out (LIFO), priority to last issued service request among the first and second service requests and manual selection by a user; and
selecting a service request based on the established order.

8. Method according to claim 7, wherein if a change in the execution order occurs causing the selection of a different service request than the service request currently under execution by the service provider application, the execution of the current service request is interrupted for executing the different service request (S940), and the state of the service provider application at the time of the interruption is saved for later restoration when the execution of the interrupted service request is resumed.

9. Method according to any one the preceding claims, wherein at least one of the service requester applications is run outside the Web browser by another runtime environment and wherein the Web browser provides an interface accessible to said service requester application enabling it to transmit its corresponding service request.

10. Method according to any one the preceding claims, wherein the first service request and the second service request are collectively processed by the service provider application as a single request.

11. A processing device (200) adapted to run a Web browser (310) for processing service requests, the processing device comprising:
loading means for loading into the Web browser a service provider application;
creating means for creating a request queue for storing service requests prior to their processing by the service provider application;
receiving means for receiving by the Web browser a first service request from a service requester application and storing the first service request in the request queue;
receiving means for receiving by the Web browser a second service request from the same or another service requester application and storing the second service request in the request queue, the service requester application, and the other service requester application if different, being executed either by the Web browser or by an operating system of the processing device; said processing device (200) **characterised in that** it comprises:
processing means for processing the first service request and the second service request at the same time using a same instance of said service provider application; and
transmitting means for transmitting data resulting from the processing of the first and the second service requests to the corresponding service requester application within the processing device.

12. A processing device according to claim 11, wherein the processing means for processing the first service request and the second service request are provided by the execution of the loaded service provider application by the Web browser.

13. A computer program product for a processing device, the computer program product comprising a sequence of instructions for running a Web browser when loaded into and executed by the processing device, the Web browser executing the following steps when run by the processing device:
creating (S430, S1030) a request queue (350) for storing service requests prior to their processing by the service provider application;
loading into the Web browser a service provider application;
receiving by the Web browser a first service request from a service requester application and storing the first service request in the request queue;
receiving by the Web browser a second service request from the same or another service requester application and storing the second service request in the request queue, the service requester application, and the other service requester application if different, being executed either by the Web browser or by an operating system of the processing device; said computer program product **characterized in that** the web browser executes the following steps when run by the processing device:
processing by a same instance of the service provider application at the same time of the first service request and the second service request; and
transmitting data resulting from the processing of the first and the second service requests by the service provider application to the corresponding service requester application within the processing device.

14. A non-transitory computer-readable storage medium storing instructions of a computer program product according to claim 13.

## Patentansprüche

1. Verfahren zum Verarbeiten von Dienstanforderungen in einem durch eine Verarbeitungsvorrichtung ausgeführten Webbrowser (310), wobei das Verfahren umfasst:
Laden einer Dienstbereitstellungsanwendung in den Webbrowser (S430, S1030);
Erzeugen (S430, S1030) einer Anforderungswarteschlange (350) zum Speichern von Dienstanforderungen vor ihrem Verarbeiten durch die Dienstbereitstellungsanwendung;
Empfangen einer ersten Dienstanforderung von einer Dienstanforderanwendung (S400, S1000) durch den Webbrowser und Speichern der ersten Dienstanforderung in der Anforderungswarteschlange; sowie
Empfangen einer zweiten Dienstanforderung von derselben oder einer anderen Dienstanforderanwendung (S400, S1000) durch den Webbrowser und Speichern der zweiten Dienstanforderung in der Anforderungswarteschlange, wobei die Dienstanforderanwendung und die andere Dienstanforderanwendung, falls sie verschieden sind, entweder durch den Webbrowser oder durch ein Betriebssystem der Verarbeitungsvorrichtung ausgeführt werden;
wobei das Verfahren **dadurch gekennzeichnet ist, dass** es umfasst:
Verarbeiten der ersten Dienstanforderung und der zweiten Dienstanforderung zur selben Zeit unter Verwendung derselben Instanz der Dienstbereitstellungsanwendung (S520, S920, S1070); sowie
Übertragen von aus dem Verarbeiten der ersten und der zweiten Dienstanforderungen resultierenden Daten zur entsprechenden Dienstanforderanwendung (S530, S950) innerhalb der Verarbeitungsvorrichtung.

2. Verfahren nach Anspruch 1,
wobei die erzeugten eine oder mehr Anforderungswarteschlangen (731, 732, 733) durch den Webbrowser verwaltet werden.

3. Verfahren nach Anspruch 1,
wobei die erzeugten eine oder mehr Anforderungswarteschlangen (831, 832, 833) durch die Dienstbereitstellungsanwendung verwaltet werden.

4. Verfahren nach Anspruch 2 oder 3,
wobei die Dienstanforderung ein Datenobjekt ist, das durch die Dienstanforderanwendung generiert wird und das Attribute enthält, die den Typ von angefordertem Dienst, die mit dem Dienst in Zusammenhang stehenden Nutzdaten und den Typ von Nutzdaten definieren.

5. Verfahren nach Anspruch 4,
wobei im erzeugenden Schritt mehrere Anforderungswarteschlangen erzeugt werden, die jeweils eingerichtet sind, Dienstanforderungen eines gegebenen Typs zu speichern.

6. Verfahren nach einem der Ansprüche 1 bis 5,
weiterhin umfassend einen Schritt, der aus den wenigstens einen erzeugten Anforderungswarteschlangen eine der ersten und der zweiten Dienstanforderungen auswählt (S510, S920), um durch die Dienstbereitstellungsanwendung verarbeitet zu werden.

7. Verfahren nach Anspruch 6,
wobei das Auswählen durchgeführt wird durch:
Festlegen einer Ausführungsreihenfolge basierend auf einer der folgenden Richtlinien: First-In First-Out (FIFO), Last-In First-Out (LIFO), Priorität für die letzte ausgegebene Dienstanforderung unter den ersten und zweiten Dienstanforderungen, und manuelle Auswahl durch einen Benutzer; sowie
Auswählen einer Dienstanforderung basierend auf der festgelegten Reihenfolge.

8. Verfahren nach Anspruch 7,
wobei, falls eine Änderung in der Ausführungsreihenfolge auftritt, die die Auswahl einer Dienstanforderung verursacht, die von der durch die Dienstbereitstellungsanwendung gerade in Ausführung befindlichen Dienstanforderung verschieden ist, die Ausführung der laufenden Dienstanforderung zum Ausführen der verschiedenen Dienstanforderung (S940) unterbrochen wird, und der Zustand der Dienstbereitstellungsanwendung zum Zeitpunkt der Unterbrechung für eine spätere Wiederherstellung gesichert wird, wenn die Ausführung der unterbrochenen Dienstanforderung fortgesetzt wird.

9. Verfahren nach einem der vorstehenden Ansprüche,
wobei wenigstens eine der Dienstanforderanwendungen durch eine andere Laufzeitumgebung außerhalb des Webbrowsers ausgeführt wird, und wobei der Webbrowser eine der Dienstanforderanwendung zugängliche Schnittstelle bereitstellt, um es ihr zu möglichen, ihre entsprechende Dienstanforderung zu übertragen.

10. Verfahren nach einem der vorstehenden Ansprüche,
wobei die erste Dienstanforderung und die zweite Dienstanforderung durch die Dienstbereitstellungsanwendung als eine einzige Anforderung kollektiv verarbeitet werden.

11. Verarbeitungsvorrichtung (200), die angepasst ist, einen Webbrowser (310) zum Verarbeiten von Dienstanforderungen auszuführen, wobei die Verarbeitungsvorrichtung umfasst:
Ladeeinrichtung zum Laden einer Dienstbereitstellungsanwendung in den Webbrowser;
Erzeugungseinrichtung zum Erzeugen einer Anforderungswarteschlange zum Speichern von Dienstanforderungen vor ihrem Verarbeiten durch die Dienstbereitstellungsanwendung;
Empfangseinrichtung zum Empfangen einer ersten Dienstanforderung von einer Dienstanforderanwendung durch den Webbrowser und zum Speichern der ersten Dienstanforderung in der Anforderungswarteschlange; sowie
Empfangseinrichtung zum Empfangen einer zweiten Dienstanforderung von derselben oder einer anderen Dienstanforderanwendung durch den Webbrowser und zum Speichern der zweiten Dienstanforderung in der Anforderungswarteschlange, wobei die Dienstanforderanwendung und die andere Dienstanforderanwendung, falls sie verschieden sind, entweder durch den Webbrowser oder durch ein Betriebssystem der Verarbeitungsvorrichtung ausgeführt werden;
wobei die Verarbeitungsvorrichtung (200) **dadurch gekennzeichnet ist, dass** sie umfasst:
Verarbeitungseinrichtung zum Verarbeiten der ersten Dienstanforderung und der zweiten Dienstanforderung zur selben Zeit unter Verwendung derselben Instanz der Dienstbereitstellungsanwendung; sowie
Übertragungseinrichtung zum Übertragen von aus dem Verarbeiten der ersten und der zweiten Dienstanforderungen resultierenden Daten zur entsprechenden Dienstanforderanwendung innerhalb der Verarbeitungsvorrichtung.

12. Verarbeitungsvorrichtung nach Anspruch 11,
wobei die Verarbeitungseinrichtung zum Verarbeiten der ersten Dienstanforderung und der zweiten Dienstanforderung durch die Ausführung der geladenen Dienstbereitstellungsanwendung durch den Webbrowser bereitgestellt wird.

13. Computerprogrammprodukt für eine Verarbeitungsvorrichtung,
wobei das Computerprogrammprodukt eine Sequenz von Anweisungen zum Ausführen eines Webbrowsers beim Laden in und Ausführen durch die Verarbeitungsvorrichtung umfasst, und wobei der Webbrowser beim Ausführen durch die Verarbeitungsvorrichtung die folgenden Schritte ausführt:
Erzeugen (S430, S1030) einer Anforderungswarteschlange (350) zum Speichern von Dienstanforderungen vor ihrem Verarbeiten durch die Dienstbereitstellungsanwendung;
Laden einer Dienstbereitstellungsanwendung in den Webbrowser;
Empfangen einer ersten Dienstanforderung von einer Dienstanforderanwendung durch den Webbrowser und Speichern der ersten Dienstanforderung in der Anforderungswarteschlange; sowie
Empfangen einer zweiten Dienstanforderung von derselben oder einer anderen Dienstanforderanwendung durch den Webbrowser und Speichern der zweiten Dienstanforderung in der Anforderungswarteschlange, wobei die Dienstanforderanwendung und die andere Dienstanforderanwendung, falls sie verschieden sind, entweder durch den Webbrowser oder durch ein Betriebssystem der Verarbeitungsvorrichtung ausgeführt werden;
wobei das Computerprogrammprodukt **dadurch gekennzeichnet ist, dass** der Webbrowser beim Ausführen durch die Verarbeitungsvorrichtung die folgenden Schritte ausführt:
Verarbeiten der ersten Dienstanforderung und der zweiten Dienstanforderung zur selben Zeit durch dieselbe Instanz der Dienstbereitstellungsanwendung; sowie
Übertragen von aus dem Verarbeiten der ersten und der zweiten Dienstanforderungen durch die Dienstbereitstellungsanwendung resultierenden Daten zur entsprechenden Dienstanforderanwendung innerhalb der Verarbeitungsvorrichtung.

14. Nichtflüchtiges computerlesbares Speichermedium, das Anweisungen von einem Computerprogrammprodukt nach Anspruch 13 speichert.

## Revendications

1. Procédé de traitement de demandes de service dans un navigateur Web (310) exécuté par un dispositif de traitement, le procédé consistant à :
charger, dans le navigateur Web, une application de fournisseur de services (S430, S1030) ;
créer (S430, S1030) une file d'attente de demandes (350) destinée à mémoriser des demandes de service avant leur traitement par l'application de fournisseur de services ;
recevoir, par le navigateur Web, une première demande de service d'une application demandeuse de service (S400, S1000) et mémoriser la première demande de service dans la file d'attente de demandes ;
recevoir, par le navigateur Web, une seconde demande de service de la même application ou d'une autre application demandeuse de service (S400, S1000) et mémoriser la seconde demande de service dans la file d'attente de demandes, l'application demandeuse de service et l'autre application demandeuse de service, dans la mesure où elle est différente, étant exécutées soit par le navigateur Web soit par un système d'exploitation du dispositif de traitement ; ledit procédé étant **caractérisé en ce qu'**il consiste à :
traiter la première demande de service et la seconde demande de service au même moment au moyen d'une même instance de ladite application de fournisseur de services (S520, S920, S1070) ; et
transmettre des données obtenues du traitement des première et seconde demandes de service à l'application demandeuse de service correspondante (S530, S950) à l'intérieur du dispositif de traitement.

2. Procédé selon la revendication 1, dans lequel la ou les plusieurs files d'attente de demandes de service (731, 732, 733) sont gérées par le navigateur Web.

3. Procédé selon la revendication 1, dans lequel la ou les plusieurs files d'attente de demandes créées (831, 832, 833) sont gérées par l'application de fournisseur de services.

4. Procédé selon la revendication 2 ou la revendication 3, dans lequel la demande de service est un objet de données généré par l'application demandeuse de service et contenant des attributs définissant le type de service demandé, les données utiles associées au service et le type de données utiles.

5. Procédé selon la revendication 4, dans lequel plusieurs files d'attente de demandes sont créées à l'étape de création, chacune étant prévue pour mémoriser des demandes de service d'un type donné.

6. Procédé selon l'une quelconque des revendications 1 à 5, comprenant en outre une étape consistant à sélectionner (S510, S920), dans l'au moins une file d'attente créée, l'une des première et seconde demandes de service à traiter par l'application de fournisseur de services.

7. Procédé selon la revendication 6, dans lequel la sélection est exécutée par :
un établissement d'un ordre d'exécution sur la base de l'une des politiques suivantes : une priorité de premier entré premier sorti (FIFO), (pour *First-In First-Out*), de dernier entré premier sorti (LIFO), (pour *Last-In First-Out*), par rapport à la dernière demande de service émise parmi les première et seconde demandes de service, et une sélection manuelle par un utilisateur ; et
une sélection d'une demande de service sur la base de l'ordre établi.

8. Procédé selon la revendication 7, dans lequel, si un changement se produit dans l'ordre d'exécution, provoquant la sélection d'une demande de service différente de la demande de service en cours d'exécution par l'application de fournisseur de services, l'exécution de la demande de service courante est interrompue à des fins d'exécution de la demande de service différente (S940), et l'état de l'application de fournisseur de services au moment de l'interruption est sauvegardé en tant que dernière restauration lors de la reprise de l'exécution de la demande de service interrompue.

9. Procédé selon l'une quelconque des revendications précédentes, dans lequel au moins l'une des applications demandeuses de service est exécutée à l'extérieur du navigateur Web par un autre environnement d'exécution, et dans lequel le navigateur Web fournit une interface accessible à ladite application demandeuse de service lui permettant de transmettre sa demande de service correspondante.

10. Procédé selon l'une quelconque des revendications précédentes, dans lequel la première demande de service et la seconde de demande de service sont traitées collectivement par l'application de fournisseur de services en tant que demande unique.

11. Dispositif de traitement (200) apte à exécuter un navigateur Web (310) destiné à traiter des demandes de service, ledit dispositif de traitement comprenant :
un moyen de chargement destiné à charger, dans le navigateur Web, une application de fournisseur de services ;
un moyen de création destiné à créer une file d'attente de demandes destinée à mémoriser des demandes de service avant leur traitement par l'application de fournisseur de services ;
un moyen de réception destiné à recevoir, par le navigateur Web, une première demande de service d'une application demandeuse de service et à mémoriser la première demande de service dans la file d'attente de demandes ;
un moyen de réception destiné à recevoir, par le navigateur Web, une seconde demande de service de la même application ou d'une autre application demandeuse de service et à mémoriser la seconde demande de service dans la file d'attente de demandes, l'application demandeuse de service et l'autre application demandeuse de service, dans la mesure où elle est différente, étant exécutées soit par le navigateur Web soit par un système d'exploitation du dispositif de traitement ; ledit dispositif de traitement (200) étant caractérisé ce qu'il comprend :
des moyens de traitement destinés à traiter la première demande de service et la seconde demande de service au même moment au moyen d'une même instance de ladite application de fournisseur de services ; et
un moyen de transmission destiné à transmettre des données obtenues du traitement des première et seconde demandes de service à l'application demandeuse de service correspondante à l'intérieur du dispositif de traitement.

12. Dispositif de traitement selon la revendication 11, dans lequel les moyens de traitement destinés à traiter la première demande de service et la seconde demande de service sont fournis par l'exécution d'une application de fournisseur de services chargée par le navigateur Web.

13. Produit programme informatique destiné à un dispositif de traitement, le produit programme informatique comprenant une séquence d'instructions destinées à exécuter un navigateur Web lorsqu'il a été chargé dans le dispositif de traitement et exécuté par ce dernier, le navigateur Web, lorsqu'il est exécuté par le dispositif de traitement, exécutant les étapes suivantes consistant à :
créer (S430, S1030) une file d'attente de demandes (350) destinée à mémoriser des demandes de service avant leur traitement par l'application de fournisseur de services ;
charger, dans le navigateur Web, une application de fournisseur de services ;
recevoir, par le navigateur Web, une première demande de service d'une application demandeuse de service et mémoriser la première demande de service dans la file d'attente de demandes ;
recevoir, par le navigateur Web, une seconde demande de service de la même application ou d'une autre application demandeuse de service et mémoriser la seconde demande de service dans la file d'attente de demandes, l'application demandeuse de service et l'autre application demandeuse de service, dans la mesure où elle est différente, étant exécutées soit par le navigateur Web soit par un système d'exploitation du dispositif de traitement ; ledit produit programme informatique étant **caractérisé en ce que** le navigateur Web, lorsqu'il est exécuté par le dispositif de traitement, exécute les étapes suivantes consistant à :
traiter, par une même instance de l'application de fournisseur de services, au même moment, la première demande de service et la seconde demande de service ; et
transmettre des données obtenues du traitement des première et seconde demandes de service par l'application de fournisseur de services à l'application demandeuse de service correspondante à l'intérieur du dispositif de traitement.

14. Support d'informations non transitoire lisible par ordinateur contenant en mémoire des instructions d'un produit programme informatique selon la revendication 13.
